# EUROPÄISCHE PATENTSCHRIFT

(11) **EP 3 745 548 B1**
(45) Veröffentlichungstag und Bekanntmachung des Hinweises auf die Patenterteilung: **05.03.2025**
(21) Anmeldenummer: 20167357.1
(22) Anmeldetag: 31.03.2020
(51) Int. Cl.: H02B 13/045

(54) **GASISOLIERTER BEHÄLTER**
GAS INSULATED CONTAINER
RÉCIPIENT À ISOLATION PAR GAZ

(30) Priorität: 29.05.2019 DE 102019114570
(43) Veröffentlichungstag der Anmeldung: 02.12.2020
(73) Patentinhaber: Schneider Electric Industries SAS, 92500 Rueil Malmaison (FR)
(72) Erfinder: HAUCK, Reino, 93015 Tegernheim (DE)
(74) Vertreter: Manitz Finsterwald Patent- und Rechtsanwaltspartnerschaft mbB

(56) Entgegenhaltungen:
- EP-A1- 0 871 269
- EP-A1- 3 483 995
- CN-A- 103 401 173
- CN-U- 206 585 262
- CN-U- 207 124 409
- DE-A1- 102006 032 396
- US-A1- 2005 121 418

## Beschreibung

Die vorliegende Erfindung betrifft einen gasisolierten Behälter für eine Schalteinrichtung der Mittelspannungstechnik.

Derartige gasisolierte Behälter unterliegen einem definierten Innendruck, der je nach Anforderung eine hohe Belastung des Materials und insbesondere der vorhandenen Schweißnaht bedeuten kann. So kann es bei einer hohen Druckbelastung zu einer Verformung der Wand und/oder des Deckels des Gehäuses kommen, so dass die Gefahr besteht, dass die vorhandene Schweißnaht aufgrund einer Verformung des Gehäuses undicht wird oder aufreißt.

Die CN 103 401 173 A offenbart einen gasisolierten Behälter für eine Schalteinrichtung der Mittelspannungstechnik, der ein von einem Deckel verschlossenes Gehäuse umfasst, wobei der Deckel entlang einer Schweißnaht mit zumindest einer Seitenwand des Gehäuses verschweißt ist. Ferner weist das Gehäuse einen Zuganker auf, der zwischen zwei Längsstreben des Gehäuses befestigt ist.

Die EP 0 871 269 A1 offenbart einen Behälter für elektrische Schalteinrichtungen, der einen vorderen und einen hinteren Deckel sowie vier Seitenwände aufweist, wobei zwei der Seitenwände durch eine Querverstrebung miteinander verbunden sind. Die EP 3 483 995 A1 offenbart einen gasisolierten Behälter für eine Schalteinrichtung der Mittelspannungstechnik, der innere oder äußere Versteifungsrippen enthält.

DE 10 2006 032 396 A1 zeigt ein Schaltanlagengehäuse mit an einem Deckel angeschweißten Seitenwänden und mehreren Zugankern. CN 207124409 U und US 2005/0121418 A1 zeigen andere Konfigurationen von Schaltanlagengehäusen, bei denen Bolzen vorgesehen sind, um den Deckel zu befestigen.

Es ist die Aufgabe der vorliegenden Erfindung, einen gasisolierten Behälter zu schaffen, bei dem auch bei erhöhter Druckbelastung eine Beschädigung der Schweißnaht unterbleibt.

Die Lösung dieser Aufgabe erfolgt durch die Merkmale des Anspruchs 1.

Mit Hilfe eines Zugankers kann die Kraft, die durch ein Verformen bzw. Ausbauchen einer Gehäusewand auf die Schweißnaht ausgeübt wird, zuverlässig aufgenommen werden, so dass die Schweißnaht nicht mehr oder nur noch geringfügig belastet wird.

Vorteilhafte Ausführungsformen der Erfindung sind in der Beschreibung, der Zeichnung sowie den Unteransprüchen beschrieben.

Nach einer ersten vorteilhaften Ausführungsform kann jeder Zuganker einen an dem Deckel starr befestigten Bolzen umfassen. Dies stellt eine kostengünstige und einfache Möglichkeit dar, die auftretenden Kräfte zuverlässig aufzunehmen.

Nach einer weiteren vorteilhaften Ausführungsform kann jeder Zuganker an dem Deckel verschweißt sein. Eine solche Befestigungsart ermöglicht einerseits eine gute Kraftübertragung. Andererseits muss keine weitere Abdichtung erfolgen, da der Zuganker nicht durch eine Öffnung oder dergleichen durch den Deckel hindurchgeführt ist.

Nach einer weiteren vorteilhaften Ausführungsform kann jeder Zuganker in jeweils eine Bohrung eingesteckt sein. Das Einstecken des Zugankers bzw. eines Bolzens zur Montage ermöglicht einen besonders zeitsparenden Zusammenbau des Behälters, da der Deckel vor dem Verschweißen lediglich auf den Behälter aufgesetzt werden muss und hierbei gleichzeitig der Zuganker in die Bohrung des Gehäuses eingesteckt werden kann, um die auftretenden Kräfte aufzunehmen.

Nach einer weiteren vorteilhaften Ausführungsform können die Bohrungen in einem Profil ausgebildet sein, das im Bereich der Schweißnaht an der Wand befestigt, insbesondere verschweißt ist. Ein solches Profil mit Bohrungen lässt sich auf einfache Weise herstellen und mit derjenigen Wand verbinden, an der die Schweißnaht angeordnet ist. Wenn hierbei die Achse der Bohrung parallel zu dieser Wand verläuft, lässt sich der Deckel durch einfaches Einstecken des Zugankers in die Bohrung montieren und anschließend verschweißen.

Nach einer weiteren vorteilhaften Ausführungsform können die Bohrungen als Langloch ausgebildet sein, dessen Quererstreckung rechtwinklig zur benachbarten Seitenwand orientiert ist. Durch die Ausbildung als Langloch lassen sich Montage- und Fertigungstoleranzen in einer Richtung parallel zur Schweißnaht kompensieren. Gleichzeitig kann jedoch der Zuganker im Wesentlichen spielfrei in der Bohrung gehalten werden, da die auf den Querschnitt des Zugankers angepasste Quererstreckung des Langlochs rechtwinklig zur Seitenwand orientiert ist.

Die Schweißnaht zur Befestigung des Deckels kann so ausgebildet sein, dass diese den Deckel mit vier benachbarten Seitenwänden verbindet. Durch eine streifenförmige Ausbildung der Schweißnaht lässt sich eine besonders gute Verbindung erzielen.

Nach einer weiteren vorteilhaften Ausführungsform können Zuganker nur im Bereich von zwei einander gegenüberliegenden Wänden vorgesehen sein. Wenn die dem Deckel benachbarten Wände des Behälters unterschiedlich groß sind, treten die größten Verformungen bei einer Druckbelastung im Bereich der flächenmäßig größten Wände auf und es kann in einem solchen Fall ausreichend sein, wenn nur im Bereich dieser Wände Zuganker vorgesehen werden.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine perspektivische Rückansicht eines gasisolierten Behälters;
- Fig. 2: eine perspektivische Vorderansicht des Behälters von Fig. 1; und
- Fig. 3: einen Schnitt durch den Behälter von Fig. 1 entlang der Linie A-A.

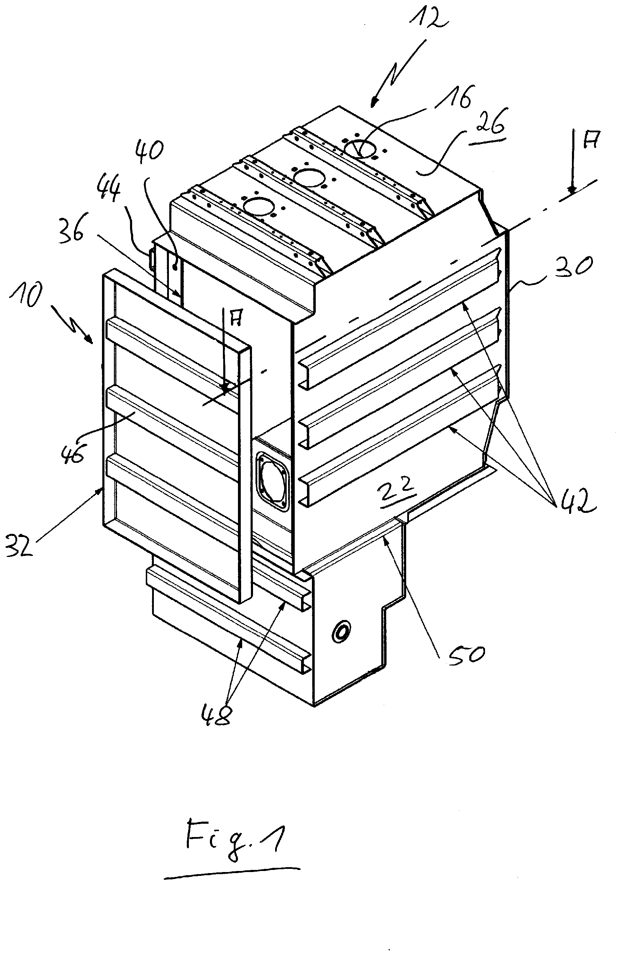

Fig. 1 zeigt einen gasisolierten Behälter für eine Schalteinrichtung der Mittelspannungstechnik (nicht dargestellt), der ein im endmontierten Zustand von einem Deckel 10 gasdicht verschlossenes Gehäuse 12 aufweist. In der Darstellung der Figuren besitzt das Gehäuse 12 zwar verschiedene Durchführungsöffnungen 16, 18 und 20. Diese sind jedoch nach erfolgter Endmontage gasdicht abgedichtet.

Das Gehäuse 12 besitzt einen grundsätzlich quaderförmigen Aufbau und ist aus vier Seitenwänden 22, 24, 26 und 28 sowie einer Vorderwand 30 zusammengesetzt, die gasdicht miteinander verbunden sind. Zum gasdichten Verschließen des Gehäuses 12 an seiner Rückseite dient der Deckel 10, der wie auch die anderen Bestandteile des Gehäuses aus Blech hergestellt ist und eine umlaufende Abkantung 32 aufweist.

Wie insbesondere Fig. 1 verdeutlicht, ist der Deckel 10 so dimensioniert, dass er in die von den Seitenwänden 22 bis 28 gebildete Öffnung eingeschoben werden kann, wobei die umlaufende Abkantung 32 des Deckels 10 im eingeschobenen Zustand an allen vier Seitenwänden 22 bis 28 anliegt. Nach Einschieben des Deckels kann dann auf grundsätzlich bekannte Art und Weise eine Schweißnaht zwischen der umlaufenden Abkantung 32 und den vier Seitenwänden 22 bis 28 hergestellt werden, die den Deckel 10 mit den Wänden 22 bis 28 verbindet und die umlaufend und streifenförmig ausgebildet ist.

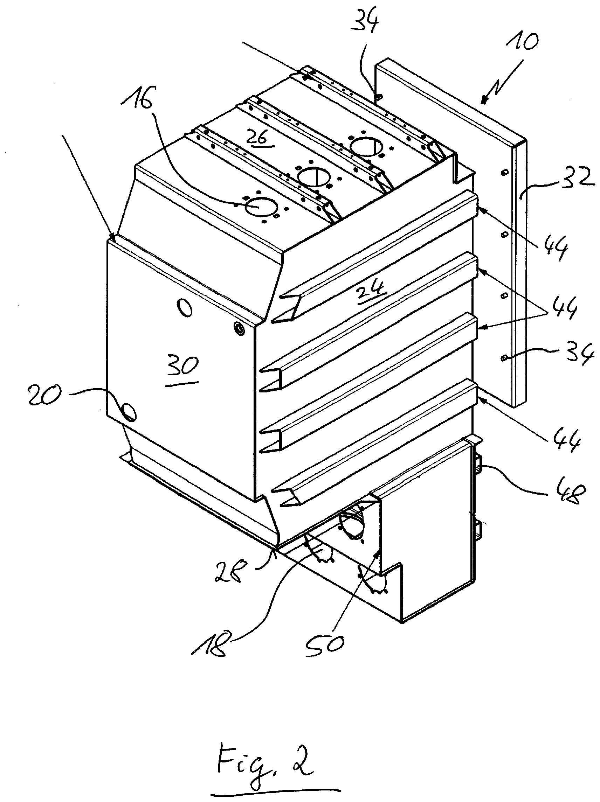

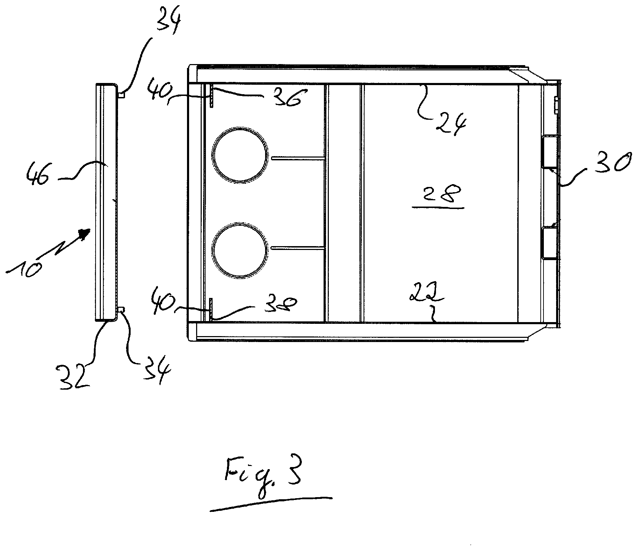

Zum Schutz dieser Schweißnaht, die in den Figuren nicht dargestellt ist, sind im Bereich der Schweißnaht zwischen dem Deckel 10 und den Seitenwänden 22 und 24 beabstandete Zuganker in Form von Bolzen 34 vorgesehen (Fig. 2 und Fig. 3). Entlang des Bereichs der Schweißnaht, welcher den Deckel 10 mit der Seitenwand 22 verbindet, befinden sich auf einer Seite vier gleichmäßig voneinander beabstandete Bolzen 34. Das gleiche gilt für den gegenüberliegenden Bereich der Schweißnaht, welcher den Deckel 10 mit der Seitenwand 24 verbindet. Die Bolzen 34 sind an dem Deckel 10 verschweißt und können als einfache Steckbolzen oder aber auch als Gewindebolzen ausgeführt sein. Obwohl die Bolzen 34 nicht verschraubt werden, würde eine Ausbildung als Gewindebolzen die Reibung zwischen dem Bolzen und dem benachbarten Bauteil erhöhen und somit für eine besonders gute Kraftübertragung sorgen.

Zur Aufnahme der Bolzen 34 ist an beiden Seitenwänden 22 und 24 des Gehäuses 12 jeweils eine Profilschiene 36, 38 angeschweißt, die sich rechtwinklig zu ihrer Seitenwand erstreckt und die insgesamt vier Bohrungen 40 aufweist, die für ein Einstecken der Zuganker 34 dienen. Hierbei verläuft die Achse jeder Bohrung 40 parallel zur benachbarten Wand 22 und 24. Die Bohrung 40 selbst kann als Langloch ausgebildet sein, dessen Quererstreckung an den Querschnitt der Bolzen 34 angepasst ist und rechtwinklig zur benachbarten Seitenwand 22 und 24 orientiert ist. Hierdurch lassen sich Herstellungs- und Fertigungstoleranzen in (in Fig. 1 und 2) vertikaler Richtung kompensieren. Gleichzeitig sind jedoch die Bolzen 34 in den Bohrungen 40 in der Darstellung von Fig. 3 nahezu spielfrei aufgenommen. Wenn sich demnach die Seitenwände 22 und 24 aufgrund einer Druckbelastung nach außen ausbauchen, verhindern die als Zuganker wirkenden Bolzen 34 in den Bohrungen 40 ein Ausbauchen der Seitenwände 22 und 24 im Bereich der Schweißnaht, da die Bolzen 34 in die Bohrungen 40 der Profile 36 und 38 eingesteckt sind.

In den Figuren bezeichnen die Bezugszeichen 42 und 44 U-förmige Verstärkungsschienen, die an der Außenseite des Gehäuses 12 aufgebracht sind. Mit dem Bezugszeichen 46 sind gleichartige Verstärkungsprofile bezeichnet, die auf die Außenseite des Deckels 10 aufgeschweißt sind. Gleichartige Verstärkungsprofile 48 befinden sich auf einem Kabelanschlussbehälter 50, der an der Unterseite des Gehäuses 12 vorgesehen ist.

## Patentansprüche

1. Gasisolierter Behälter für eine Schalteinrichtung der Mittelspannungstechnik, umfassend ein von einem Deckel (10) verschlossenes Gehäuse (12) und mehrere Zuganker (34),
wobei der Deckel (10) entlang einer Schweißnaht mit zumindest einer Seitenwand (22, 24) des Gehäuses (12) verschweißt ist,
**dadurch gekennzeichnet, dass** die mehrere Zuganker (34) im Bereich der Schweißnaht, welche den Deckel (10) mit der Seitenwand (22, 24) verbindet, zwischen Deckel (10) und Seitenwand (22, 24) vorgesehen sind.

2. Behälter nach Anspruch 1,
**dadurch gekennzeichnet, dass**
die Zuganker (34) einen an dem Deckel (10) starr befestigten Bolzen umfassen.

3. Behälter nach Anspruch 1 oder 2,
**dadurch gekennzeichnet, dass**
die Zuganker (34) an dem Deckel (10) verschweißt sind.

4. Behälter nach einem der vorstehenden Ansprüche,
**dadurch gekennzeichnet, dass**
jeder Zuganker (34) in jeweils eine Bohrung (40) eingesteckt ist.

5. Behälter nach einem der vorstehenden Ansprüche,
**dadurch gekennzeichnet, dass**
die Bohrung (40) in einem Profil (36, 38) ausgebildet ist, das an der Seitenwand (22, 24) befestigt, insbesondere verschweißt ist.

6. Behälter nach Anspruch 5,
**dadurch gekennzeichnet, dass**
die Achse der Bohrung (40) parallel zur benachbarten Seitenwand (22, 24) verläuft.

7. Behälter nach einem der vorstehenden Ansprüche 4 - 6,
**dadurch gekennzeichnet, dass**
die Bohrung (40) als Langloch ausgebildet ist, dessen Quererstreckung rechtwinklig zur benachbarten Seitenwand (22, 24) orientiert ist.

8. Behälter nach einem der vorstehenden Ansprüche,
**dadurch gekennzeichnet, dass**
die Schweißnaht den Deckel (10) mit vier Seitenwänden (22, 24) verbindet.

9. Behälter nach einem der vorstehenden Ansprüche,
**dadurch gekennzeichnet, dass**
die Schweißnaht streifenförmig ausgebildet ist.

10. Behälter nach einem der vorstehenden Ansprüche,
**dadurch gekennzeichnet, dass**
Zuganker (34) nur im Bereich von zwei einander gegenüber liegenden Seitenwänden (22, 24) vorgesehen sind.

## Claims

1. A gas-insulated container for a switching device of medium-voltage technology, said gas-insulated container comprising a housing (12) closed by a cover (10) and a plurality of tie rods (34),
wherein the cover (10) is welded along a weld seam to at least one side wall (22, 24) of the housing (12),
**characterized in that**, in the region of the weld seam which connects the cover (10) to the side wall (22, 24), the plurality of tie rods (34) are provided between the cover (10) and the side wall (22, 24).

2. A container according to claim 1,
**characterized in that**
the tie rods (34) comprise a pin rigidly fastened to the cover (10).

3. A container according to claim 1 or 2,
**characterized in that**
the tie rods (34) are welded to the cover (10).

4. A container according to any one of the preceding claims,
**characterized in that**
each tie rod (34) is inserted into one bore (40) in each case.

5. A container according to any one of the preceding claims,
**characterized in that**
the bore (40) is formed in a profile (36, 38) which is fastened, in particular welded, to the side wall (22, 24).

6. A container according to claim 5,
**characterized in that**
the axis of the bore (40) extends parallel to the adjacent side wall (22, 24).

7. A container according to any one of the preceding claims 4 to 6,
**characterized in that**
the bore (40) is formed as an elongate hole whose transverse extent is oriented at a right angle to the adjacent side wall (22, 24).

8. A container according to any one of the preceding claims,
**characterized in that**
the weld seam connects the cover (10) to four side walls (22, 24).

9. A container according to any one of the preceding claims,
**characterized in that**
the weld seam is strip-shaped.

10. A container according to any one of the preceding claims,
**characterized in that**
tie rods (34) are only provided in the region of two mutually oppositely disposed side walls (22, 24).

## Revendications

1. Récipient à isolation gazeuse pour un dispositif de commutation de la technique moyenne tension, comprenant un boîtier (12), fermé par un couvercle (10), et plusieurs tirants d'ancrage (34),
le couvercle (10) étant soudé à au moins une paroi latérale (22, 24) du boîtier (12) le long d'un cordon de soudure,
**caractérisé en ce que**
lesdits plusieurs tirants d'ancrage (34) sont prévus entre le couvercle (10) et la paroi latérale (22, 24) dans la zone du cordon de soudure qui relie le couvercle (10) à la paroi latérale (22, 24).

2. Récipient selon la revendication 1,
**caractérisé en ce que**
les tirants d'ancrage (34) comprennent un boulon (34) fixé rigidement au couvercle (10).

3. Récipient selon la revendication 1 ou 2,
**caractérisé en ce que**
les tirants d'ancrage (34) sont soudés au couvercle (10).

4. Récipient selon l'une des revendications précédentes,
**caractérisé en ce que**
chaque tirant d'ancrage (34) est inséré dans un alésage respectif (40).

5. Récipient selon l'une des revendications précédentes,
**caractérisé en ce que**
l'alésage (40) est formé dans un profilé (36, 38) qui est fixé, en particulier soudé, à la paroi latérale (22, 24).

6. Récipient selon la revendication 5,
**caractérisé en ce que**
l'axe de l'alésage (40) est parallèle à la paroi latérale (22, 24) voisine.

7. Récipient selon l'une des revendications précédentes 4 à 6,
**caractérisé en ce que**
l'alésage (40) est conçu comme un trou oblong dont l'extension transversale est orientée à angle droit par rapport à la paroi latérale (22, 24) voisine.

8. Récipient selon l'une des revendications précédentes,
**caractérisé en ce que**
le cordon de soudure relie le couvercle (10) à quatre parois latérales (22, 24).

9. Récipient selon l'une des revendications précédentes,
**caractérisé en ce que**
le cordon de soudure est en forme de bande.

10. Récipient selon l'une des revendications précédentes,
**caractérisé en ce que**
les tirants d'ancrage (34) ne sont prévus que dans la zone de deux parois latérales (22, 24) opposées l'une à l'autre.
